Europäisches Patentamt

(19) European Patent Office

Office européen des brevets

(11) Numéro de publication: **0 195 172**
**B1**

(12) **FASCICULE DE BREVET EUROPEEN**

(45) Date de publication du fascicule du brevet:
18.01.89

(21) Numéro de dépôt: **85440070.2**

(22) Date de dépôt: **19.11.85**

(51) Int. Cl.⁴: **F 16 D 41/12**

(54) Roue libre à transmission irréversible, en particulier pour dispositif d'entraînement des roues motrices d'une tondeuse à gazon autotractée.

(30) Priorité: **15.03.85 FR 8504006**

(43) Date de publication de la demande:
**24.09.86 Bulletin 86/39**

(45) Mention de la délivrance du brevet:
**18.01.89 Bulletin 89/3**

(84) Etats contractants désignés:
**AT BE DE NL SE**

(56) Documents cités:
**DE-A- 3 242 371**
**DE-C- 669 832**
**FR-A- 526 122**
**FR-A- 2 250 543**
**FR-A- 2 378 981**
**GB-A- 764 293**
**GB-A- 2 089 911**
**LU-A- 34 569**
**US-A- 1 883 966**
**US-A- 3 222 943**

(73) Titulaire: **Outils Wolf, Société à responsabilité limitée,
Rue de l'Industrie, F-67160 Wissembourg (FR)**

(72) Inventeur: **L'inventeur a renonce a sa designation**

(74) Mandataire: **Nuss, Pierre et al, 10, rue Jacques Kablé,
F-67000 Strasbourg (FR)**

ACTORUM AG

**Description**

La présente invention concerne le domaine de la construction d'organes de transmission, en particulier pour dispositif d'entraînement des roues motrices d'une tondeuse à gazon autotractée, et a pour objet une roue libre à transmission irréversible pour un tel dispositif d'entraînement.

Actuellement, un organe de transmission à roue libre est généralement intégré à l'entraînement des roues motrices d'une tondeuse à gazon. Un tel organe est affecté à chaque roue motrice et permet de réaliser l'effet différentiel nécessaire pour effectuer des changements de direction sans patinage des roues sur le sol. En outre, cet organe autorise également une rotation des roues dans le sens de la marche tout en assurant la liaison avec l'arbre de transmission en sens opposé.

Les organes de transmission à roue libre existants assurent correctement leur fonction d'entraînement, mais ne permettent cependant pas une désolidarisation de la liaison d'entraînement qui reste systématique en cas de marche arrière, par exemple lorsque la tondeuse est tirée en arrière, notamment pour la dégager devant des obstacles, ou autres. L'utilisateur est donc obligé de fournir un effort supplémentaire relativement important pour vaincre toutes les résistances de frottement se produisant au niveau de la transmission dans le cas d'une telle marche arrière.

En outre, du fait que les transmissions de tondeuses à gazon sont généralement munies d'un réducteur de vitesse, deux solutions techniques sont couramment utilisées pour permettre un déplacement en marche arrière, à savoir la mise en oeuvre d'un réducteur réversible, ou le montage entre le réducteur et les roues d'un organe de liaison débrayable commandé directement par l'utilisateur.

Cependant, ces transmissions font apparaître des contraintes techniques particulières conduisant à une sophistication de la construction, et à une augmentation importante du prix de revient.

La présente invention a pour but de pallier ces inconvénients.

Elle a, en effet, pour objet une roue libre, en particulier pour dispositif d'entraînement des roues motrices d'une tondeuse à gazon autotractée, caractérisée en ce qu'elle est à transmission irréversible et est essentiellement constituée par un arbre de transmission muni d'un porte-cliquet solidarisé avec l'arbre au moyen d'une goupille d'entraînement, par des cliquets mobiles montés à articulation sur le porte-cliquet, par une rondelle de commande comportant des fentes oblongues coopérant avec des tétons cylindriques solidaires chacun d'un cliquet, et par une cage réceptrice formant simultanément le moyeu de la roue motrice et comportant des cannelures destinées à coopérer avec les cliquets en position d'entraînement.

L'invention sera mieux comprise grâce à la description ci-après, qui se rapporte à un mode de réalisation préféré, donné à titre d'exemple non limitatif, et expliqué avec référence aux dessins schématiques annexés, dans lesquels:

la figure 1 est une vue en élévation et en coupe de la roue libre conforme à l'invention, et

la figure 2 est une vue en coupe suivant A-A de la figure 1.

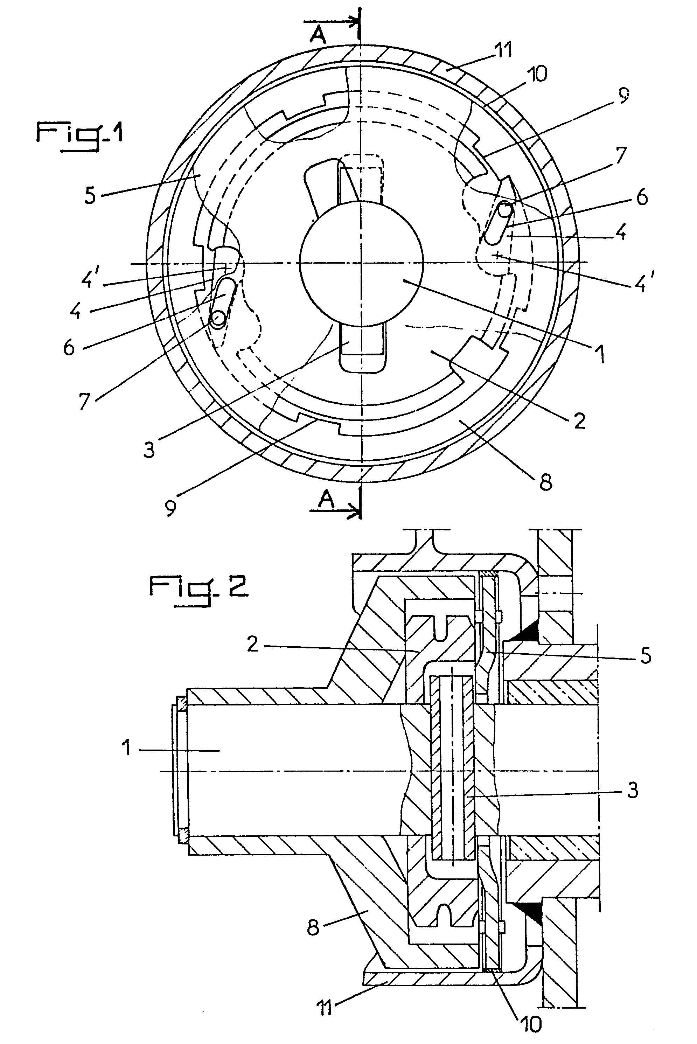

Conformément à l'invention, et comme le montrent, à titre d'exemple, les figures 1 et 2 des dessins annexés, la roue libre, en particulier pour dispositif d'entraînement des roues motrices d'une tondeuse à gazon autotractée, est à transmission irréversible et est constituée par un arbre de transmission 1 monté en aval d'un réducteur de vitesse et d'un embrayage commandé par l'utilisateur, et sur lequel est monté un porte-cliquet 2 qui est rendu solidaire de l'arbre 1 au moyen d'une goupille d'entraînement 3. Le porte-cliquet 2 est pourvu de cliquets mobiles 4 montés à articulation sur des axes 4', ces cliquets 4 étant commandés au moyen d'une rondelle de commande 5, qui comporte des fentes oblongues 6 coopérant avec des tétons cylindriques 7 solidaires chacun d'un cliquet 4. Le porte-cliquet 2 est entouré, en outre, par une cage réceptrice 8 qui forme simultanément le moyeu de la roue motrice et qui comporte des cannelures 9 qui sont destinées à coopérer avec les cliquets 4 en position d'entraînement.

Les fentes oblongues 6 sont inclinées obliquement en direction du diamètre extérieur de la rondelle 5 de manière à réaliser un basculement des cliquets 4 autour de leur axe 4' en direction des cannelures 9 lors de la rotation du porte-cliquet 2, et inversement.

La rondelle de commande 5 est montée à rotation libre sur l'arbre de transmission 1 et coopère avec un dispositif de freinage 10 sous forme d'un manchon en matière synthétique, ou autre, monté dans le carter 11 entourant la roue libre et s'appuyant avec léger frottement par son diamètre intérieur sur le diamètre extérieur de la rondelle 5, ou par montage de ladite rondelle avec un léger pincement entre deux disques solidaires du carter 11. Ce freinage relatif de la rondelle 5 est nécessaire pour permettre un actionnement des cliquets 4 dans le sens d'une coopération avec les cannelures 9 lors de l'embrayage de la transmission, et d'un actionnement en sens inverse desdits cliquets, après débrayage, lors d'une marche arrière par traction sur le guidon de la machine.

L'arbre de transmission 1 est entraîné par le moteur de la tondeuse de manière débrayable par un mécanisme non représenté. Cet arbre 1 comporte, à chaque extrémité un porte-cliquet 2 solidaire en rotation dudit arbre 1 au moyen d'une goupille 3. Lorsque l'arbre 1 est entraîné par le moteur, le porte-cliquet 2 est entraîné solidairement, et la force de freinage appliquée à la rondelle 5 par le dispositif 10 a pour effet de faire glisser les tétons 7 des cliquets 4 dans les fentes 6 jusqu'à prise des extrémités libres desdits cliquets 4 dans les cannelures 9 de la cage 8, la rondelle 5 étant alors entraînée ensemble avec la cage réceptrice 8, dont l'extrémité opposée ou porte-cliquet 2 forme simultanément le moyeu de la roue motrice.

Lors d'un débrayage de l'entraînement, la tondeuse continue d'avancer sur une certaine distance du fait de son inertie, de sorte que, les roues continuant à tourner, et l'arbre étant déjà immobile, les cliquets 4 se rétractent automatiquement sous l'effet des cannelures 9 appuyant sur leur face opposée et provoquant leur effacement par un mouvement relatif entre porte-cliquet 2 et rondelle 5.

Les roues motrices peuvent donc tourner librement dans les deux sens de rotation.

L'invention permet donc de réaliser l'effacement des éléments d'entraînement des roues libres lorsque l'arbre d'entraînement est débrayé ou lorsque le moteur est à l'arrêt, de sorte qu'il ne subsiste aucune résistance particulière dans les deux sens de rotation.

L'embrayage de l'arbre d'entraînement réalise instantanément la liaison d'entraînement des roues et donc la transmission du mouvement aux roues motrices, et les organes d'entraînement assurent l'effet différentiel recherché entre les roues motrices.

Grâce à l'invention, il est possible de réaliser des transmissions à roues libres permettant notamment de tirer en arrière des tondeuses autotractées sans grand effet et donc d'éviter un mouvement d'entraînement réversible. En outre, l'invention permet d'éliminer certaines contraintes de construction, en particulier elle permet une simplification de la construction des réducteurs et un libre choix de leurs rapports de réduction, et l'embrayage peut être placé en amont des réducteurs.

**Revendications**

1. Roue libre, en particulier pour dispositif d'entraînement des roues motrices d'une tondeuse à gazon autotractée, caractérisée en ce qu'elle est à transmission irréversible et est essentiellement constituée par un arbre de transmission (1) muni d'un porte-cliquet (2) solidarisé avec l'arbre (1) au moyen d'une goupille d'entraînement (3), par des cliquets mobiles (4) montés à articulation sur le porte-cliquet (2), par une rondelle de commande (5) comportant des fentes oblongues (6) coopérant avec des tétons cylindriques (7) solidaires chacun d'un cliquet (4), et par une cage réceptrice (8) formant simultanément le moyeu de la roue motrice et comportant des cannelures (9) destinées à coopérer avec les cliquets (4) en position d'entraînement.

2. Roue libre, suivant la revendication 1, caractérisée en ce que les fentes oblongues (6) sont inclinées obliquement en direction du diamètre extérieur de la rondelle (5) de manière à réaliser un basculement des cliquets (4) autour de leur axe (4') en direction des cannelures (9) lors de la rotation du porte-cliquet (2), et inversement.

3. Roue libre, suivant l'une quelconque des revendications 1 et 2, caractérisée en ce que la rondelle de commande (5) est montée à rotation libre sur l'arbre de transmission (1) et coopère avec un dispositif de freinage (10) sous forme d'un manchon en matière synthétique, ou autre, monté dans le carter (11) entourant la roue libre et s'appuyant avec léger frottement par son diamètre intérieur sur le diamètre extérieur de la rondelle (5), ou par montage de ladite rondelle avec un léger pincement entre deux disques solidaires du carter (11).

**Patentansprüche**

1. Freilauf, insbesondere für die Mitnehmereinrichtung der Antriebsräder eines selbstfahrenden Rasenmähers, dadurch gekennzeichnet, dass er ein nicht umkehrbares Getriebe besitzt und im wesentlichen aus einer mit einem mit der Getriebewelle (1) mittels eines Mitnehmerstiftes (3) fest verbundenen Gesperrehalter (2) versehenen Getriebewelle (1), aus beweglichen, gelenkig an dem Gesperrehalter (2) befestigten Gesperren (4), aus einer längliche Schlitze (6) aufweisenden Steuerscheibe (5), welche mit an je einem Gesperre (4) verankerten, zylindrischen Zapfen (7) zusammenarbeiten, und aus einem Aufnahmekörper (8), der gleichzeitig die Nabe des Antriebsrades bildet und Auskehlungen (9) aufweist, die dazu dienen, mit den Gesperren (4) in Mitnehmerposition zusammenzuwirken, besteht.

2. Freilauf nach Anspruch 1, dadurch gekennzeichnet, dass die länglichen Schlitze (6) schräg in Richtung des Aussendurchmessers der Steuerscheibe (5) geneigt sind, um ein Kippen der Gesperre (4) um ihre Achse (4') in Richtung der Auskehlungen (9) während der Drehung des Gesperrehalters (2), und umgekehrt, durchzuführen.

3. Freilauf nach einem der Ansprüche 1 und 2, dadurch gekennzeichnet, dass die Steuerscheibe (5) mit freier Drehung an der Getriebewelle (1) befestigt ist und mit einer Bremsvorrichtung (10) in Form einer Muffe aus synthetischem oder anderem Material zusammenarbeitet, die in dem den Freilauf umgebenden Gehäuse (11) montiert ist und mit leichter Reibung mit ihrem Innendurchmesser auf dem Aussendurchmesser der Steuerscheibe (5), oder durch Montage der besagten Scheibe mit einer leichten Klemmung zwischen zwei mit dem Gehäuse (11) fest verbundenen Scheiben aufsitzt.

**Claims**

1. A free-wheel, particularly for a device for driving the wheels of a self-propelled lawn mower, characterised in that it has an irreversible transmission and consists essentially of a transmission shaft (1) equipped with a pawl carrier (2) ridigly connected to the shaft (1) by means of a drive pin (3), of movable pawls (4) articulately mounted on the pawl carrier (2), of a control disc (5) comprising oblong slots (6) cooperating with cylindrical studs (7) each rigidly connected to a pawl (4), and of a receiving cage (8) simultaneously forming the hub of the wheel and comprising grooves (9) adapted to cooperate with the pawls (4) in the driving position.

2. A free-wheel according to Claim 1, characterised in that the oblong slots (6) are inclined obliquely in the direction of the external diameter of the disc (5) in such a manner as to effect a tilting over of the pawls (4) about their axis (4') in the direction of the grooves (9) on rotation of the pawl carrier (2) and conversely.

3. A free-wheel according to either one of Claims 1 and 2, characterised in that the control disc (5) is mounted for free rotation on the transmission shaft (1) and cooperates with a braking device (10) in the form of a sleeve of synthetic material or the like, mounted in the casing (11) surrounding the free-wheel and bearing with slight friction by its internal diameter on the external diameter of the disc (5) or by mounting of said disc with a slight nipping between two discs rigidly connected to the casing (11).

Fig.1

Fig.2